# EUROPÄISCHE PATENTSCHRIFT

(11) **EP 2 756 331 B1**
(45) Veröffentlichungstag und Bekanntmachung des Hinweises auf die Patenterteilung: **05.04.2023**
(21) Anmeldenummer: 12766398.7
(22) Anmeldetag: 12.09.2012
(51) Int. Cl.: G01S 19/01, B60R 16/02, G05D 1/02, G01S 19/48, B60W 30/14, B60W 50/00, G01C 21/16, B60R 16/023, G01S 19/47, G08C 19/24, G06K 9/62, G06K 9/00

(54) **ZEITKORRIGIERTES SENSORSYSTEM**
TIME-CORRECTED SENSOR SYSTEM
SYSTÈME CAPTEUR À CORRECTION TEMPORELLE

(30) Priorität: 12.09.2011 DE 102011082534; 12.09.2011 DE 102011082535; 12.09.2011 DE 102011082539; 12.09.2011 DE 102011082548; 12.09.2011 DE 102011082549; 12.09.2011 DE 102011082551; 12.09.2011 DE 102011082552; 21.11.2011 DE 102011086710; 02.05.2012 DE 102012207297
(43) Veröffentlichungstag der Anmeldung: 23.07.2014
(73) Patentinhaber: Continental Automotive Technologies GmbH, 30165 Hannover (DE)
(72) Erfinder: STEINHARDT, Nico, 60327 Frankfurt (DE)
(74) Vertreter: Continental Corporation
(86) Internationale Anmeldenummer: PCT/EP2012/067873
(87) Internationale Veröffentlichungsnummer: WO 2013/037850

(56) Entgegenhaltungen:
- EP-A2- 1 845 003
- DE-A1-102008 002 576
- US-A- 5 928 309
- US-A1- 2003 009 282
- US-A1- 2009 222 204
- US-A1- 2010 114 416

## Beschreibung

Die Erfindung betrifft ein Sensorsystem gemäß Oberbegriff von Anspruch 1 sowie dessen Verwendung in Kraftfahrzeugen, insbesondere in Automobilen.

Offenlegungsschrift DE 10 2010 063 984 A1 beschreibt ein Sensorsystem, umfassend mehrere Sensorelemente und eine Signalverarbeitungseinrichtung, wobei die Signalverarbeitungseinrichtung so ausgelegt ist, dass die Ausgangssignale der Sensorelemente gemeinsam ausgewertet werden.

Aus der US 2003/0009282 A1 geht ein Datenerfassungs- und Sensorsystem hervor, bei dem Sensordaten mit Zeitmarken versehen werden, um eine Interpolation durchführen zu können.

Die US 2010/0114416 A1 beschreibt die Daten-Erfassung von Laser-Scanner, GPS-Sensor und Inertial-Sensoren, wobei die Sensordaten mit Zeitmarken versehen werden, um eine Positions- und Umgebungsbeschreibung, basierend auf einem gemeinsamen Datensatz, erzeugen zu können.

Die US 5 928 309 A offenbart ein Sensorsystem, bei dem Positionen eines Fahrzeugs bezogen auf einen Zeitpunkt gespeichert und mit externen Positionsreferenzen eines Radio Navigationssystems bezogen auf einen identischen Zeitpunkt korrigiert werden.

Der Erfindung liegt die Aufgabe zu Grunde, ein Sensorsystem vorzuschlagen, welches eine relativ hohe Genauigkeit bezüglich der Auswertung und/oder Verarbeitung der Ausgangssignale und/oder Daten von Sensorelementen ermöglicht.

Diese Aufgabe wird gelöst durch das Sensorsystem gemäß Anspruch 1.

Es ist bevorzugt, dass die Sensorelemente so ausgebildet sind, dass sie zumindest teilweise unterschiedliche primäre Messgrößen erfassen und zumindest teilweise unterschiedliche Messprinzipien nutzen.

Das Sensorsystem ist in einem Fahrzeug, insbesondere einem Kraftfahrzeug, besonders bevorzugt einem Automobil, angeordnet.

Das Fusionsfilter ist so ausgebildet, dass nacheinander Funktionsschritte durchführt werden, denen jeweils eine Zeitinformation des Eingangswerts einer physikalischen Größe mit der jüngsten Zeitinformation zugeordnet wird, wobei in den Funktionsschritten jeweils Daten/Werte zu physikalischen Größen verarbeitet werden und zu definierten Zeitpunkten Fusionsdatensätze bereitgestellt werden, welche jeweils einen relativen Wert der physikalischen Größe sowie eine Information über die Datenqualität bezüglich jeder physikalischen Größe bereitstellt, die das Fusionsfilter verarbeitet und/oder berechnet.

Das Fusionsfilter weist zumindest zu einer der physikalischen Größen intern einen Absolutwert und/oder internen Wert dieser physikalischen Größe auf, wobei die Absolutwerte und/oder internen Werte der vergangenen Funktionsschritte zu einer oder mehreren physikalischen Größen eine definierte Zeitspanne, gespeichert und bereitgehalten werden.

Abhängig von der Zeitinformation der Eingangswerte einer physikalischen Größe des Fusionsfilters werden diese Eingangswerte im Fusionsfilter verrechnet, indem sie mit dem Absolutwert und/oder internen Wert derselben physikalischen Größe verglichen und/oder verrechnet werden, deren Zeitinformation, also die Zeitinformation des Absolutwerts und/oder des internen Werts, im Wesentlichen mit der Zeitinformation des Eingangswerts übereinstimmt.

Es wird der Absolutwert und/oder interne Wert derselben physikalischen Größe mit welcher der Eingangswert verglichen und/oder verrechnet wird, aus den beiden bezüglich der Zeitinformationen zeitlich nächstliegenden, gespeicherten und bereitgehalten Absolutwerten und/oder internen Werten interpoliert wird, insbesondere sind dies der Absolutwert und/oder interne Wert mit einer Zeitinformation, welche etwas jünger ist und der Absolutwert und/oder interne Wert mit einer Zeitinformation, welche etwas älter ist als die Zeitinformation des zugeordneten Eingangswerts.

Es wird den Eingangswerten des Fusionsfilters jeweils eine Zeitinformation zugeordnet wodurch diese Eingangswerte physikalischer Größen jeweils einen Zeitrang aufweisen, wobei im Rahmen des anstehenden Funktionsschritts die Eingangswerte physikalischer Größen des Fusionsfilters mit internen Werten des Fusionsfilters derselben physikalischen Größen verrechnet werden, welche im Zeitrang und/oder bezüglich der Zeitinformation im Wesentlichen der jeweiligen Zeitinformation und/oder dem Zeitrang der jeweiligen Eingangsgröße entsprechen.

Die Signalverarbeitungseinrichtung ist so ausgebildet, dass der Zeitrang des aktuell anstehenden Funktionsschritts definiert wird durch die Zeitinformation des Eingangswerts einer physikalischen Größe mit der jüngsten Zeitinformation, wobei die Eingangswerte physikalischer Grö-ßen, deren Zeitinformation älter sind auf den Zeitrang der jüngsten Zeitinformation extrapoliert werden und anschließend mit internen Werten des Fusionsfilters verrechnet werden.

Die Signalverarbeitungseinrichtung ist so ausgebildet, dass die definierte Zeitspanne, in welcher Daten/ Informationen/ Werte gespeichert und bereitgehalten werden, definiert wird durch die maximale Verzögerung der Eingangsdaten des Fusionsfilters, welche sich aus der maximalen Differenz der Zeitinformation der Messung einer physikalischen Größe relativ zur Zeitinformation eines aktuell anstehenden Funktionsschritts des Fusionsfilter bestimmt, wobei die maximale Verzögerung insbesondere definiert ist größer oder gleich der maximal erwarteten Verzögerung einer Messung eines Satellitennavigationssystems, welches Teil des Sensorsystems ist.

Es ist zweckmäßig, dass die Signalverarbeitungseinrichtung so ausgebildet ist, dass die definierte Zeitspanne, in welcher Daten/ Informationen/ Werte gespeichert und bereitgehalten werden, definiert wird durch eine definierte Zeitspanne, welche für einige oder jede physikalische Größe unterschiedlich ausgeprägt ist.

Das Sensorsystem umfasst ein Satellitennavigationssystem, welches einen Synchronisationsimpuls und/oder ein Synchronisationsverfahren bereitstellt, mit welchem die Zeitinformationen des Fusionsfilters mit den Zeitinformationen des Satellitennavigationssystems synchronisiert werden.

Es ist zweckmäßig, dass das Satellitennavigationssystem Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe bereitstellt, welche als Eingangswerte an das Fusionsfilter übertragen werden, wobei diese Eingangswerte physikalischer Größen des Satellitennavigationssystem mit internen Werten des Fusionsfilters zeitkorrigiert verrechnet werden, indem in Abhängigkeit der Zeitinformationen der Eingangswerte die internen Werte dieser physikalischen Größen extrapoliert werden, falls die Zeitinformationen der Eingangswerte dieser physikalischen Größen älter sind als Zeitinformation des aktuell anstehenden Funktionsschritts des Fusionsfilters, wobei zur Extrapolation insbesondere ein Gradient der letzten zwei Werte einer solchen physikalischen Größe verwendet wird, falls diese zwei Werte auf zwei aufeinanderfolgenden Messungen beruhen, zwischen denen keine Messung derselben Messgröße ausgefallen ist.

Es ist bevorzugt, dass das Fusionsfilter so ausgebildet ist, dass es wenigstens eine Modellannahme berücksichtigt, welche davon ausgeht, dass die Offsetwerte und/oder Änderungswerte und/oder Korrekturwerte und/oder Fehlerwerte zwischen einem oder mehreren Funktionsschritten des Fusionsfilters sich nur begrenzt oder vernachlässigbar ändern innerhalb der definierte Zeitspanne, für welche insbesondere Absolutwerte und/oder internen Werte physikalischer Größen gespeichert werden.

Der Erfindung liegt der Gedanke zu Grunde, um die redundanten Messdaten verschiedener Sensoren bzw. Sensorelemente bzw. zusätzlich eines Satellitennavigationssystems, die zu unterschiedlichen Zeitpunkten gemessen werden, in einem Fusionsfilter miteinander zu verrechnen und damit die Vorteile der Redundanz in Rahmen einer Sensorfusion nutzen zu können, ist es vorteilhaft, dass Messgrößen und/oder interne Werte des Fusionsfilters die zum gleichen Messzeitpunkt gehörend vorliegen zu verrechnen, um den Fehler zwischen veralteten Messdaten, welche die Eingangswerte des Fusionsfilters bilden, zu aktuellen Messdaten, den Werten zu den Messdaten, welche aktuell in einem anstehenden Funktionsschritts des Fusionsfilters vorliegen, möglichst gering zu halten.

Das Fusionsfilter ist so ausgebildet, dass die Vergleichswerte bzw. interne Werte physikalischer Größen des Fusionsfilters über eine gewisse Zeit bzw. eine definierte Zeitspanne, die insbesondere sämtliche Verzugszeiten aller Eingangsdaten abdecken sollte, zwischengespeichert werden und dann für die Datenfusion der passende interne Wert der Vergangenheit für den Vergleich ausgewählt wird und mit einem Eingangswert verrechnet wird. Konkret kann dies beispielsweise durch die Abtastung/Samplerate/Messzeitpunkte beschränkt sein, ein gewisses Abstandsintervall zwischen internen Werten des Filters und Messdaten bleibt besonders bevorzugt bestehen. Alternativ vorzugsweise werden die Werte zwischen 2 Abtastungen des Filters soweit feininterpoliert, dass ein gültiger Messwert passend zum Zeitpunkt der Messdaten vorliegt. Wenn nun die internen Werte aus Fusion und Messdaten bzw. Eingangswerte, jeweils gleicher physikalischer Größe, zum gleichen Zeitpunkt bzw. mit im Wesentlichen gleicher zugeordneter Zeitinformation vorliegen, können sie einfach miteinander verrechnet/fusioniert werden. Zweckmäßigerweise erfolgt ein Vergleich der Daten aus der Fusion mit denen der Messdaten, daraus werden dann die Korrekturwerte bestimmt, welche die Werte des Fusionsfilters aktualisieren.

Die Signalverarbeitungseinrichtung ist so ausgebildet, dass sämtliche Eingangswerte des Fusionsfilters jeweils samt den zugeordneten Zeitinformationen für eine definierte Zeitspanne gespeichert werden sowie dass die Absolutwerte und/oder internen Werte der vergangenen Funktionsschritte des Fusionsfilters zu einer oder mehreren physikalischen Größen eine definierte Zeitspanne samt den jeweils zugeordneten Zeitinformationen gespeichert werden. Es ist zweckmäßig, dass der Zeitrang des aktuell anstehenden Funktionsschritts wird definiert durch die Zeitinformation des Eingangswerts einer physikalischen Größe mit der jüngsten Zeitinformation. Zweckmäßigerweise werden abhängig von der Zeitinformation der Eingangswerte, einer physikalischen Grö-ße, des Fusionsfilters diese Eingangswerte im Fusionsfilter verrechnet, indem sie mit dem Absolutwert und/oder internen Wert derselben physikalischen Größe verglichen und/oder verrechnet werden, deren Zeitinformation, also die Zeitinformation des Absolutwerts und/oder des internen Werts, im Wesentlichen mit der Zeitinformation des Eingangswerts übereinstimmt. Das Ergebnis dieser Verrechnung hat den Zeitrang bzw. bezieht sich auf den Zeitpunkt der Zeitinformation, welche der Eingangsgröße sowie dem Absolutwert bzw. internen Wert zugeordnet waren. Ausgehend von diesem Ergebnis werden einer oder mehrere Funktionsschritte durch das Fusionsfilter durchgeführt, mit den jeweils um einen Funktionsschritt jüngeren Eingangsdaten und Absolutwerten bzw. internen Werten zeitlich vorwärts gerechnet werden, bis das Ergebnis des Funktionsschritts vorliegt, der den Zeitrang hat bzw. dem eine Zeitinformation zugeordnet ist, welcher dem Zeitrang des zu Beginn dieses Berechnungsprozesses aktuell anstehenden Funktionsschritts entspricht, welcher definiert wurde durch die Zeitinformation des Eingangswerts einer physikalischen Größe mit der jüngsten Zeitinformation.

Bevorzugt versteht man unter einem Zeitrang eine absolute oder relative Zeitinformation oder alternativ vorzugsweise einen Rang in einer zeitlichen Reihenfolge, alternativ insbesondere eine Kombination aus beidem.

Das Fusionsfilter ist bevorzugt als Kalmanfilter ausgebildet, alternativ vorzugsweise als Partikelfilter, oder alternativ als Informationsfilter oder alternativ als "Unscented" Kalmanfilter.

Es ist bevorzugt, dass das Fusionsfilter so ausgebildet ist, dass der Fusionsdatensatz als Wert der wenigstens einen physikalischen Größe einen relativen Wert umfasst, insbesondere einen Offsetwert und/oder Änderungswert und/oder Korrekturwert und/oder Fehlerwert.

Es ist zweckmäßig, dass der die relativen Werte der jeweiligen physikalischen Größen des Fusionsdatensatzes Korrekturwerte sind, denen jeweils eine Streuungsinformation bzw. Streuung bzw. Streuungsmaß, insbesondere eine Varianz, als Information über deren Datenqualität zugeordnet sind.

Es ist bevorzugt, dass das Fusionsfilter so ausgebildet ist, dass der Wert wenigstens einer physikalischen Größe des Fusionsdatensatzes auf direkter oder indirekter Basis von Sensorsignalen mehrerer Sensorelemente berechnet wird, wobei diese Sensorelemente diese wenigstens eine physikalische Größe redundant in direkter oder indirekter Weise erfassen. Diese redundante Erfassung ist besonders bevorzugt direkte bzw. parallele Redundanz verwirklicht und/oder als analytische Redundanz verwirklicht, aus rechnerisch abgeleiteten bzw. hergeleiteten Größen/Werten und/oder Modellannahmen.

Das Fusionsfilter ist bevorzugt als Kalmanfilter ausgebildet, das iterativ wenigstens Prädiktionsschritte sowie Korrekturschritte durchführt und zumindest teilweise den Fusionsdatensatz bereitstellt. Insbesondere ist das Fusionsfilter als Error State Space Extended Sequential Kalman Filter ausgebildet, also als Kalman Filter, das besonders bevorzugt eine Linearisierung umfasst und in welchem Fehlerzustandsinformationen berechnet und/oder geschätzt werden und/oder welches sequentiell arbeitet und dabei die in dem jeweiligen Funktionsschritt der Sequenz verfügbaren Eingangsdaten verwendet/berücksichtigt.

Es ist zweckmäßig, dass das Sensorsystem eine Inertialsensoranordnung aufweist, umfassend wenigstens ein Beschleunigungssensorelement und zumindest ein Drehratensensorelement, und dass das Sensorsystem eine Strapdown-Algorithmus-Einheit umfasst, in welcher ein Strapdown-Algorithmus durchgeführt wird, mit dem wenigstens die Sensorsignale der Inertialsensoranordnung zu, insbesondere korrigierten, Navigationsdaten und/oder Fahrdynamikdaten verarbeitet werden, bezogen auf das Fahrzeug, in welchem das Sensorsystem angeordnet ist.

Es ist besonders bevorzugt, dass die Strapdown-Algorithmus-Einheit ihre berechneten Navigationsdaten und/oder Fahrdynamikdaten dem Fusionsfilter direkt oder indirekt bereitstellt.

Das Sensorsystem weist vorzugsweise eine Inertialsensoranordnung auf, welche so ausgebildet ist, dass sie zumindest die Beschleunigung entlang einer zweiten definierten Achse, insbesondere der Querachse des Fahrzeugs, und wenigstens die Drehrate um eine dritte definierte Achse, insbesondere der Hochsachse des Fahrzeugs, erfassen kann, wobei die erste und die dritte definierte Achse ein Erzeugendensystem bilden, und dabei insbesondere senkrecht zueinander ausgerichtet sind,
wobei das Sensorsystem außerdem mindestens ein Raddrehzahlsensorelement, insbesondere zumindest oder genau vier Raddrehzahlsensorelemente aufweist, welche die Raddrehzahl eines Rades oder die Raddrehzahlen jeweils eines der Räder des Fahrzeugs erfassen und insbesondere zusätzlich die Drehrichtung des zugeordneten Rades des Fahrzeugs erfassen, in dem das Sensorsystem angeordnet ist,
wobei das Sensorsystem zusätzlich wenigstens ein Lenkwinkelsensorelement umfasst, welches den Lenkwinkel des Fahrzeugs erfasst und
wobei das Sensorsystem darüber hinaus ein Satellitennavigationssystem umfasst, welches insbesondere so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt.

Besonders bevorzugt ist die Inertialsensoranordnung so ausgebildet, dass sie zumindest die Beschleunigungen entlang einer ersten, einer zweiten und einer dritten definierte Achse und wenigstens die Drehraten um diese erste, um diese zweite und um diese dritte definierte Achse erfassen kann, wobei diese erste, zweite und dritte definierte Achse ein Erzeugendensystem bilden, und dabei insbesondere jeweils senkrecht zueinander ausgerichtet sind.

Es ist bevorzugt, dass die Inertialsensoranordnung ihre Sensorsignale der Strapdown-Algorithmus-Einheit bereitstellt und die Strapdown-Algorithmus-Einheit so ausgebildet ist, dass sie zumindest
aus den Sensorsignalen der Inertialsensoranordnung sowie insbesondere wenigstens einer Fehlerzustandsinformation und/oder Varianz und/oder Information über die Datenqualität, die einem Sensorsignal oder einer physikalischen Größe zugeordnet ist und von dem Fusionsfilter bereitgestellt wird,
als Messgrößen und/oder Navigationsdaten und/oder Fahrdynamikdaten
mindestens korrigierte Beschleunigungen entlang der ersten, der zweiten und der dritten definierten Achse,
wenigstens korrigierte Drehraten um diese drei definierten Achsen,
wenigstens eine Geschwindigkeit bezüglich dieser drei definierten Achsen
sowie zumindest eine Positionsgröße berechnet und/oder bereitstellt.

Es ist zweckmäßig, dass das Sensorsystem so ausgebildet ist, dass jeweils zumindest ein Sensorsignal und/oder eine physikalische Größe als direkte oder abgeleitete Größe der Inertialsensoranordnung und/oder der Strapdown-Algorithmus-Einheit,
der Raddrehzahlsensorelemente und des Lenkwinkelsensorelements, insbesondere indirekt über eine Fahrzeugmodelleinheit,
sowie des Satellitennavigationssystems, dabei insbesondere Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe,
dem Fusionsfilter bereitstellt und vom Fusionsfilter bei dessen Berechnungen berücksichtigt werden.

Es ist besonders bevorzugt, dass die Fahrzeugmodelleinheit so ausgebildet ist, dass aus den Sensorsignalen der Raddrehzahlsensorelemente und des Lenkwinkelsensorelements die Geschwindigkeit entlang der ersten definierten Achse, die Geschwindigkeit entlang der zweiten definierten Achse sowie die Drehrate um die dritte definierte Achse berechnet werden.

Es ist ganz besonders bevorzugt, dass die Fahrzeugmodelleinheit so ausgebildet ist, dass sie zur Berechnung ein Verfahren der kleinsten Fehlerquadrate zur Lösung eines überbestimmten Gleichungssystems, insbesondere als Least-Squared-Error-Verfahren bekannt, verwendet.

Es ist zweckmäßig, dass die Fahrzeugmodelleinheit so ausgebildet ist, dass sie bei ihrer Berechnung mindestens folgende physikalische Größen und/oder Parameter berücksichtigt
a) den Lenkwinkel jedes Rades, insbesondere durch den Lenkwinkelsensor für die beiden Vorderräder erfasst, wobei die Modellannahme getroffen wird, dass der Lenkwinkel der Hinterräder gleich Null ist oder dass der Lenkwinkel der Hinterräder zusätzlich erfasst wird,
b) die Raddrehzahl oder eine davon abhängige Größe jeden Rades,
c) die Drehrichtung jeden Rades,
d) der dynamische Halbmesser und/oder Raddurchmesser jeden Rades und
e) die Spurbreite jeder Achse des Fahrzeugs und/oder den Radstand zwischen den Achsen des Fahrzeugs.

Die Signalverarbeitungseinrichtung ist vorzugsweise so ausgebildet, dass das Fusionsfilter den Fusionsdatensatz zu definierten Zeitpunkten berechnet und/oder bereitstellt und/oder ausgibt.

Das Fusionsfilter ist bevorzugt so ausgebildet, dass es den Fusionsdatensatz unabhängig von den Abtastraten und/oder Sensorsignalausgabezeitpunkten der Sensorelemente, insbesondere der Raddrehzahlsensorelemente und des Lenkwinkelsensorelements, und unabhängig von zeitlichen Signal- oder Messgrößen-/ oder Informationsausgabezeitpunkten des Satellitennavigationssystems, berechnet und/oder bereitstellt und/oder ausgibt.

Es ist zweckmäßig, dass die Signalverarbeitungseinrichtung so ausgebildet ist, dass im Zuge eines Funktionsschritts des Fusionsfilters stets, insbesondere asynchron, die neuesten, dem Fusionsfilter verfügbaren Informationen und/oder Signale und/oder Daten der Sensorelemente, insbesondere der Raddrehzahlsensorelemente und des Lenkwinkelsensorelements, direkt oder indirekt, insbesondere mittels der Fahrzeugmodelleinheit und des Satellitennavigationssystems direkt oder indirekt, sequenziell aktualisiert und/oder in das Fusionsfilter aufgenommen werden und bei der Berechnung des zugeordneten Funktionsschritts des Fusionsfilters berücksichtigt werden.

Es ist bevorzugt, dass das Sensorsystem eine Stillstandserkennungseinheit aufweist, welche so ausgebildet ist, dass sie einen Stillstand des Fahrzeugs erkennen kann und im Fall eines erkannten Stillstands des Fahrzeugs zumindest dem Fusionsfilter Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen.

Es ist bevorzugt, dass die Signalverarbeitungseinrichtung eine erste Gruppe von Daten physikalischer Größen berechnet und/oder verwendet, deren Werte sich auf ein Fahrzeugkoordinatensystem beziehen und wobei die Signalverarbeitungseinrichtung zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei
das Sensorsystem eine Ausrichtungsmodelleinheit aufweist, mit welcher der Ausrichtungswinkel zwischen dem Fahrzeugkoordinatensystem und dem Weltkoordinatensystem berechnet wird, wobei
der Ausrichtungswinkel zwischen dem Fahrzeugkoordinatensystem und dem Weltkoordinatensystem in der Ausrichtungsmodelleinheit berechnet wird zumindest auf Basis folgender Größen:
   die Geschwindigkeit bezüglich des Fahrzeugkoordinatensystems,
   die Geschwindigkeit bezüglich des Weltkoordinatensystems und insbesondere der Lenkwinkel.

Es ist zweckmäßig, dass die folgenden Begriffe synonym verwendet werden, also technisch umgesetzt dasselbe bedeuten: Offsetwert, Änderungswert, Korrekturwert und Fehlerwert.

Unter einer Fehlerzustandsinformation wird bevorzugt eine Fehlerinformation und/oder eine Fehlerkorrekturinformation und/oder eine Streuungsinformation und/oder eine Varianzinformation und/oder eine Genauigkeitsinformation verstanden.

Unter dem Begriff Varianz wird vorzugsweise der Begriff Streuung verstanden, wobei insbesondere im Fall eines allgemeinen Fusionsfilters, dieses jeweils eine Streuung bzw. einen Streuungswert jedem Wert einer physikalischen Größe des Fusionsfilters zuordnet, und im Fall eines Kalmanfilters als Fusionsfilters, jeweils eine Varianz jedem Wert einer physikalischen Größe des Fusionsfilters zuordnet wird/ist.

Es ist zweckmäßig, dass die erste, zweite und dritte definite Achse bezogen auf ein Koordinatensystem des Fahrzeugs, in dem das Sensorsystem implementiert ist, wie folgt definiert sind:
die erste definierte Achse entspricht der Längsachse des Fahrzeugs,
die zweite definierte Achse entspricht der Querachse des Fahrzeugs und
die dritte definierte Achse entspricht der Hochachse des Fahrzeugs. Diese drei Achsen bilden insbesondere ein kartesisches Koordinatensystem.

Es ist bevorzugt, dass das Fusionsfilter so ausgebildet ist, dass seine Daten, insbesondere die physikalischen Größen bzw. die Daten der physikalischen Größen des Fusionsdatensatzes, in stets konstant große Blöcke aufgeteilt sind oder werden, welche in beliebiger Reihenfolge im Fusionsfilter iterativ verarbeitet werden, das Fusionsfilter führt also bezüglich seiner Eingangsdaten ein sequentielles Update durch. Dabei ist das Fusionsfilter besonders bevorzugt so ausgebildet, dass die Filtergleichungen angepasst werden, so dass das rechnerische Ergebnis des sequentiellen Updates in jeden Schritt des Fusionsfilters ein Update, also eine Datenaktualisierung, für sämtliche Messgrößen der Eingangsdaten des Fusionsfilters ist.

Das Sensorsystem ist in einem Fahrzeug, insbesondere einem Kraftfahrzeug, besonders bevorzugt einem Automobil, angeordnet.

Das Sensorsystem ist bevorzugt so ausgebildet, dass Daten des Satellitennavigationssystems, insbesondere Positionsdaten, eine Zeitstempelinformation zugeordnet wird, welche im Wesentlichen den Messzeitpunkt dieser Daten beschreibt. Die Zeitstempelinformation des jeweiligen Datums des Satellitennavigationssystems wird gemeinsam mit diesem jeweiligen Datum dem Fusionsfilter bereitgestellt und bei der internen Berechnung im Fusionsfilter berücksichtigt.

Bevorzugt wird außerdem den Daten weiterer oder sämtlicher Sensorelemente und/oder der Inertialsensoranordnung ebenfalls eine solche Zeitstempelinformation zugeordnet, die ebenfalls mit dem jeweiligen Datum dem Fusionsfilter bereitgestellt wird und bei der internen Berechnung im Fusionsfilter berücksichtigt wird. Zweckmäßigerweise wird bezüglich der Daten des Satellitennavigationssystems die jeweilige Zeitstempelinformation von dem Satellitennavigationssystem selbst erzeugt.

Es ist bevorzugt, dass bei den zusätzlichen Zeitstempelinformationen der weiteren Sensorelemente und/oder der Inertialsensoranordnung die jeweilige Zeitstempelinformation von der Signalverarbeitungseinrichtung erzeugt wird, insbesondere in Abhängigkeit der Zeitmessung des Satellitennavigationssystems.

Vorzugsweise umfasst ein Funktionsschritt des Fusionsfilters wenigstens einen Prädiktionsschritt sowie einen Korrekturschritt. Das Fusionsfilter ist dabei iterativ ausgebildet und führt iterativ, nacheinander Funktionsschritte aus. Insbesondere werden innerhalb jedes Funktionsschritts des Fusionsfilters Daten bzw. Werte bzw. Signale eingelesen, also Eingangsdaten berücksichtigt, also auch Daten bzw. Werte bzw. Signale ausgegeben, also als Ausgangs-/ Ausgabedaten bereitgestellt.

Das Fusionsfilter ist vorzugsweise so ausgebildet, dass das Fusionsfilter mehrere Aktualisierungsschritte innerhalb eines Funktionsschritts durchführt, wobei diese Aktualisierungsschritte sich auf das Laden bzw. Verwenden bzw. Aktualisieren von Eingangsdaten bzw. -signalen bezieht. Das Fusionsfilter geht insbesondere sequentiell sämtliche Eingangsgrößen bzw. Eingangssignale durch und prüft jeweils ob neue Informationen/ Daten vorliegen. Falls ja werden diese in das Filter übernommen bzw. die Informationen/ Daten im Filter aktualisiert, falls nein bleibt der aktuelle Wert erhalten und das Filter prüft den nächsten Eingang bzw. die nächste Eingangsgröße bzw. das nächste Eingangssignal.

Die Strapdown-Algorithmus-Einheit stellt vorzugsweise zumindest absolute Werte physikalischer Größen bereit, insbesondere absolute Werte für die Beschleunigung, die Drehrate, die Geschwindigkeit, dabei jeweils bezogen auf die drei Achsen den Fahrzeug- und/oder Weltkoordinatensystem, sowie eine Position und den Ausrichtungswinkel. Die Werte zu diesen Größen werden dabei besonders bevorzugt alle von der Strapdown-Algorithmus-Einheit als korrigierte Werte/ Größen bereitgestellt.

Es ist zweckmäßig, dass die Inertialsensoranordnung das Fusionsfilter taktet und/oder triggert, insbesondere wird jeder Fusionsschritt, der vom Fusionsfilter ausgeführt wird, von der Inertialsensoranordnung bzw. wenigstens einem Ausgangssignal bzw. Ausgangsdatum getriggert.

Es ist bevorzugt, dass die Strapdown-Algorithmus-Einheit so ausgebildet ist, dass sie einen Startvektor physikalischer Größen aufweist und/oder einen Startwert der Position, insbesondere bezüglich des Starts des Sensorsystems, besonders bevorzugt nach jedem Einschalten des Sensorsystems. Diesen Startvektor und/oder diese Startposition erhält die Strapdown-Algorithmus-Einheit besonders bevorzugt über das Fusionsfilter von dem Satellitennavigationssystem.

Es ist zweckmäßig, dass die Daten des Fusionsfilters, insbesondere dessen Fusionsdatensatz, einen virtuellen Sensor abbilden bzw. einem solchen entsprechen.

Unter dem Begriff Sensorelemente werden bevorzugt die Raddrehzahlsensorelemente, das wenigstens eine Lenkwinkelsensorelement, die Sensorelemente der Inertialsensoranordnung und insbesondere zusätzlich auch das Satellitennavigationssystem verstanden.

Es ist bevorzugt, wenn allgemein eine Größe und/oder Wert hinsichtlich der drei definierten Achsen angegeben wird, dass dies bezüglich des Fahrzeugkoordinatensystems und/oder des Weltkoordinatensystems gemeint ist.

Es ist zweckmäßig, dass der Fusionsdatensatz, der Werte der physikalischen Größen umfasst, einen relativen Wert, beispielhaft einen Korrekturwert, auch Offsetwert genannt, umfasst und insbesondere der Strapdown-Algorithmus-Einheit bereitstellt. Beispielgemäß ergibt sich dieser jeweilige Korrekturwert jeweils aus den kumulierten Fehlerwerten bzw. Änderungswerten, die vom Fusionsfilter bereitgestellt werden.

Die Erfindung bezieht sich außerdem auf die Verwendung des Sensorsystems in Fahrzeugen, insbesondere Kraftfahrzeugen, besonders bevorzugt in Automobilen.

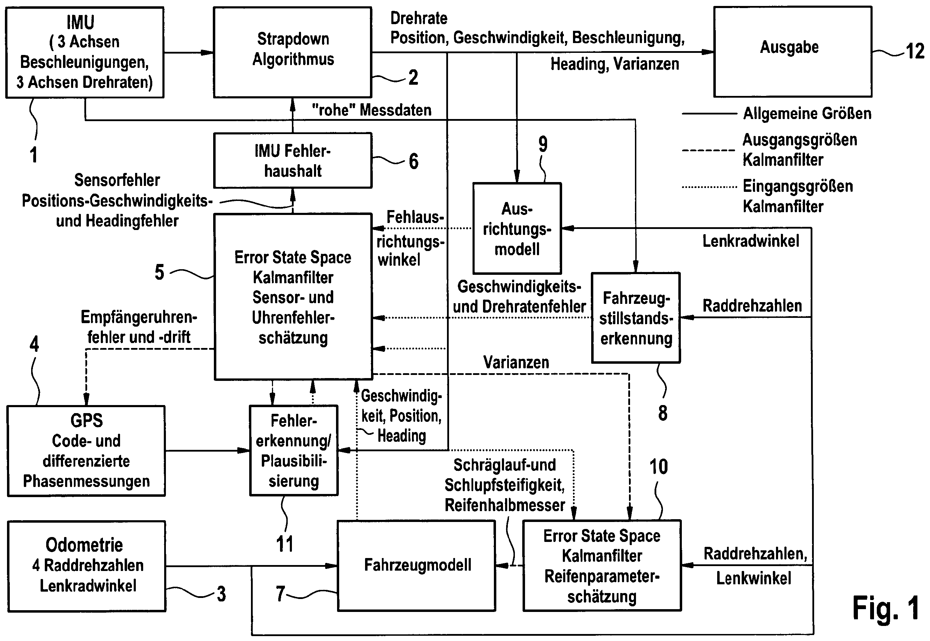

Weitere bevorzugte Ausführungsformen ergeben sich aus den Unteransprüchen und der nachfolgenden Beschreibung eines Ausführungsbeispiels an Hand von Fig. 1.

Fig. 1 zeigt in schematischer Darstellung ein Ausführungsbeispiel des Sensorsystems, das zur Anordnung und Verwendung in einem Fahrzeug vorgesehen ist. Dabei sind die Sensorelemente und das Satellitennavigationssystem sowie die wichtigsten Signalverarbeitungseinheiten der Signalverarbeitungseinrichtung als Funktionsblöcke veranschaulicht und deren Zusammenwirken untereinander.

Das Sensorsystem umfasst eine Inertialsensoranordnung 1, IMU, "inertial measurement unit", die so ausgebildet ist, dass sie zumindest die Beschleunigungen entlang einer ersten, einer zweiten und einer dritten definierte Achse und wenigstens die Drehraten um diese erste, um diese zweite und um die dritte definierte Achse erfassen kann, wobei die erste definierte Achse der Längsachse des Fahrzeugs entspricht, die zweite definierte Achse der Querachse des Fahrzeugs entspricht und die dritte definierte Achse der Hochachse des Fahrzeugs entspricht. Diese drei Achsen bilden ein kartesisches Koordinatensystem, das Fahrzeugkoordinatensystem.

Das Sensorsystem weist eine Strapdown-Algorithmus-Einheit 2 auf, in welcher ein Strapdown-Algorithmus durchgeführt wird, mit dem wenigstens die Sensorsignale der Inertialsensoranordnung 1 zu korrigierten, Navigationsdaten und/oder Fahrdynamikdaten verarbeitet werden. Diese Ausgangsdaten der Strapdown-Algorithmus-Einheit 2 umfassen die Daten folgender physikalischer Größen:
die Geschwindigkeit, die Beschleunigung sowie die Drehrate jeweils des Fahrzeugs, beispielhaft bezüglich der drei Achsen des Fahrzeugkoordinatensystems und beispielgemäß zusätzlich jeweils bezogen auf ein Weltkoordinatensystem, das zur Beschreibung der Ausrichtung und/oder von dynamischen Größen des Fahrzeugs auf der Welt geeignet ist. Außerdem umfassen die Ausgangsdaten der Strapdown-Algorithmus-Einheit 2 die Position bezüglich des Fahrzeugkoordinatensystems und die Ausrichtung hinsichtlich des Weltkoordinatensystems. Zusätzlich weisen die Ausgangsdaten der Strapdown-Algorithmus-Einheit die Varianzen als Information über die Datenqualität der obig genannten physikalischen Größen auf, zumindest einiger davon. Diese Varianzen werden beispielgemäß nicht in der Strapdown-Algorithmus-Einheit berechnet, sondern nur von dieser verwendet und weitergeleitet.

Die Ausgangsdaten der Strapdown-Algorithmus-Einheit sind beispielhaft außerdem die Ausgangsdaten bzw. -signale bzw. Ausgabedaten 12 des gesamten Sensorsystems.

Das Sensorsystem umfasst außerdem Raddrehzahlsensorelemente 3 für jedes Rad des Fahrzeugs, beispielgemäß vier, welche die Raddrehzahlen jeweils eines der Räder des Fahrzeugs erfassen und jeweils zusätzlich die Drehrichtung erfassen, und zusätzlich ein Lenkwinkelsensorelement 3, das den Lenkwinkel des Fahrzeugs erfasst. Die Raddrehzahlsensorelement und das Lenkwinkelsensorelement bilden eine Sensoranordnung 3 zur Erfassung der Odometrie.

Darüber hinaus weist das Sensorsystem ein Satellitennavigationssystem 4 auf, welches so ausgebildet ist, dass es die Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe erfasst und/oder bereitstellt. Zusätzlich stellt das Satellitennavigationssystem 4 beispielgemäß dem Fusionsfilter eine Startposition bzw. Startpositionsinformation bereit, zumindest zum Start oder Einschalten des Sensorsystems.

Die Signalverarbeitungseinrichtung des Sensorsystems umfasst außerdem ein Fusionsfilter 5. Das Fusionsfilter 5 stellt im Zuge der gemeinsamen Auswertung zumindest der Sensorsignale und/oder daraus abgeleiteter Signale der Sensorelemente 3, also der Odometrie, und der Ausgangssignale des Satellitennavigationssystems 4 und/oder daraus abgeleiteter Signale einen definierten Fusionsdatensatz 6 bereit. Dieser Fusionsdatensatz weist jeweils Daten zu definierten physikalischen Größen auf, wobei der Fusionsdatensatz 6 zu wenigstens einer physikalischen Größe einen Wert dieser physikalischen Größe und eine Information über deren Datenqualität umfasst, wobei diese Information über die Datenqualität beispielgemäß als Varianz ausgeprägt ist.

Der Fusionsdatensatz 6 umfasst als Wert der wenigstens einen physikalischen Größe einen relativen Wert, beispielhaft einen Korrekturwert, auch Offsetwert genannt. Beispielgemäß ergibt sich der Korrekturwert jeweils aus den kumulierten Fehlerwerten bzw. Änderungswerten, die vom Fusionsfilter 5 bereitgestellt werden.

Die relativen Werte der jeweiligen physikalischen Größen des Fusionsdatensatzes 6 sind also beispielgemäß Korrekturwerte und Varianzen. Der Fusionsdatensatz 6 berechnet beispielgemäß, anders formuliert, einen Fehlerhaushalt, welcher als Eingangsgröße bzw. Eingangsdatensatz der Strapdown-Algorithmus-Einheit bereitgestellt wird und von dieser bei ihren Berechnungen zumindest teilweise berücksichtigt wird. Dieser Fehlerhaushalt umfasst als Datensatz bzw. Ausgangsdaten zumindest Korrekturwerte bzw. Fehlerwerte physikalischer Größen sowie jeweils eine Varianz, als Information über die Datenqualität, zu jedem Wert. Hierbei werden vom Fusionsfilter zumindest die Korrekturwerte und Varianzen zu den physikalischen Größen Geschwindigkeit, Beschleunigung und Drehrate, jeweils bezogen auf das Fahrzeugkoordinatensystem, also jeweils die drei Komponenten dieser Größen bezüglich dieses Koordinatensystems, sowie IMU-Ausrichtung bzw. der IMU-Ausrichtungswinkel zwischen Fahrzeugkoordinatensystem und dem Koordinatensystem bzw. der Einbauausrichtung der Inertialsensoranordnung 1 sowie die Position bezogen auf das Weltkoordinatensystem an die Strapdown-Algorithmus-Einheit übertragen.

Die Werte der physikalischen Größen des Fusionsdatensatzes werden auf direkter bzw. indirekter Basis der Sensorsignale der Sensorelemente 3 und des Satellitennavigationssystems 4 berechnet, wobei wenigstens einige Größen, beispielsweise die Geschwindigkeit und die Position des Fahrzeugs bezüglich der Fahrzeugkoordinaten redundant zu den Daten der Strapdown-Algorithmus-Einheit 2 erfasst werden und verwertet werden.

Das Fusionsfilter 5 ist als beispielgemäß als Error State Space Extended Sequential Kalman Filter ausgebildet ist, also als Kalman Filter, das insbesondere eine Linearisierung umfasst und in welchem die Korrekturwerte berechnet und/oder geschätzt werden und welches sequentiell arbeitet und dabei die in dem jeweiligen Funktionsschritt der Sequenz verfügbaren Eingangsdaten verwendet/berücksichtigt.

Das Fusionsfilter 5 ist so ausgebildet, dass im Zuge eines Funktionsschritts des Fusionsfilters stets, asynchron, die neuesten, dem Fusionsfilter verfügbaren Informationen und/oder Signale und/oder Daten
der Sensorelemente 3, also der Raddrehzahlsensorelemente und des Lenkwinkelsensorelements indirekt mittels einer Fahrzeugmodelleinheit 7 und
des Satellitennavigationssystems 4 direkt oder indirekt, sequenziell aktualisiert und/oder in das Fusionsfilter aufgenommen werden und bei der Berechnung des zugeordneten Funktionsschritts des Fusionsfilters 5 berücksichtigt werden.

Die Fahrzeugmodelleinheit 7 ist so ausgebildet, dass sie aus den Sensorsignalen der Raddrehzahlsensorelemente 3 und des Lenkwinkelsensorelements 3 zumindest
die Geschwindigkeit entlang einer ersten definierten Achse,
die Geschwindigkeit entlang einer zweiten definierten Achse sowie die Drehrate um eine dritte definierte Achse berechnet und dem Fusionsfilter 5 bereitstellt.

Das Sensorsystem weist beispielgemäß vier Raddrehzahlsensorelemente 3 auf, wobei jeweils eins der Raddrehzahlsensorelemente jedem Rad des Fahrzeugs zugeordnet ist, wobei die Fahrzeugmodelleinheit 7 so ausgebildet ist, dass sie aus den Sensorsignalen der Raddrehzahlsensorelemente und dem Lenkwinkel, bereitgestellt durch die Lenkwinkelsensoreinheit, und/oder dem Lenkwinkel jeden Rades, insbesondere erfasst durch das Lenkwinkelsensorelement für die Vorderräder und mittels wenigstens eines weiteren Lenkwinkelsensorelements für die Hinterräder oder zumindest aus einer Modellannahme für die Hinterräder,
die Geschwindigkeitskompenenten und/oder die Geschwindigkeit, jedes Rades, entlang/bezüglich der ersten und der zweiten definierten Achse direkt oder indirekt berechnet, wobei aus diesen acht Geschwindigkeitskomponenten und/oder den vier Geschwindigkeiten jeweils bezüglich der ersten und zweiten definierten Achse,
die Geschwindigkeit entlang einer ersten definierten Achse, die Geschwindigkeit entlang einer zweiten definierten Achse sowie die Drehrate um eine dritte definierte Achse berechnet wird.

Das Sensorsystem bzw. dessen Signalverarbeitungseinrichtung umfasst außerdem eine Reifenparameterschätzungseinheit 10, welche so ausgebildet ist, dass sie zumindest den Halbmesser, beispielgemäß den dynamischen Halbmesser, jeden Rades berechnet und zusätzlich die Schräglaufsteifigkeit und die Schlupfsteifigkeit jeden Rades berechnet und der Fahrzeugmodelleinheit 7 als zusätzliche Eingangsgrößen bereitstellt, wobei die Reifenparameterschätzungseinheit 10 so ausgebildet ist, dass sie ein im Wesentlichen lineares Reifenmodell zur Berechnung der Rad-/Reifengrößen verwendet. Die beispielgemäßen Eingangsgrößen der Reifenparameterschätzungseinheit sind dabei die Raddrehzahlen 3 und der Lenkwinkel 3, zumindest teilweise oder vollständig die Ausgangsgrö-ßen bzw. -werte der Strapdown-Algorithmus-Einheit 2, insbesondere die von ihr bereitgestellten Varianzen zusätzlich zu den Werten der physikalischen Größen, sowie die Varianzen des Fusionsfilters 5, zu den physikalischen Größen, welche die Eingangsgrößen der Reifenparameterschätzungseinheit 10 sind.

Das Sensorsystem bzw. dessen Signalverarbeitungseinrichtung umfasst außerdem eine GPS-Fehlererkennungs-und-Plausibilisierungseinheit 11, welche so ausgebildet ist, dass sie beispielgemäß als Eingangsdaten die Ausgangsdaten bzw. Ausgangssignale des Satellitennavigationssystem 4 sowie zumindest teilweise die Ausgangsdaten bzw. Ausgangssignale der Strapdown-Algorithmus-Einheit 2 erhält und in ihren Berechnungen berücksichtigt

Dabei ist die GPS-Fehlererkennungs-und-Plausibilisierungseinheit 11 zusätzlich mit dem Fusionsfilter 5 verbunden und tauscht mit diesem Daten aus.

Die GPS-Fehlererkennungs-und-Plausibilisierungseinheit 11 ist beispielhaft so ausgebildet, dass sie folgendes Verfahren durchführt:
Verfahren zum Auswählen eines Satelliten, umfassend:
   - Messen von Messlagedaten des Fahrzeuges gegenüber dem Satelliten basierend auf dem GNSS-Signal, also dem Globalen Navigationssatellitensystem-Signal, dem Ausgangssignal bzw.
den Ausgangsdaten des Satellitennavigationssystems 4,
   - Bestimmen von zu den basierend auf dem GNSS-Signal bestimmten Messlagedaten redundanten Referenzlagedaten des Fahrzeuges; und
   - Auswählen des Satelliten, wenn eine Gegenüberstellung der Messlagedaten und der Referenzlagedaten einer vorbestimmten Bedingung genügt,
   - wobei zur Gegenüberstellung der Messlagedaten und der Referenzlagedaten eine Differenz zwischen den Messlagedaten und den Referenzlagedaten gebildet wird,
   - wobei die vorbestimmte Bedingung ein maximal zulässiger Fehler zwischen den Messlagedaten und den Referenzlagedaten ist,
   - wobei der maximal zulässige Fehler von einer Standardabweichung abhängig ist, die basierend auf einer Summe aus einer Referenzvarianz für die Referenzlagedaten und einer Messvarianz für die Messlagedaten berechnet wird,
   - wobei der maximal zulässige Fehler einem Vielfachen der Standardabweichung derart entspricht, dass eine Wahrscheinlichkeit, dass die Messlagedaten in ein von der Standardabweichung abhängiges Streuintervall einen vorbestimmten Schwellwert unterschreiten.

Das Sensorsystem bzw. dessen Signalverarbeitungseinrichtung weist außerdem eine Stillstandserkennungseinheit 8 auf, welche so ausgebildet ist, dass sie einen Stillstand des Fahrzeugs erkennen kann und im Fall eines erkannten Stillstands des Fahrzeugs zumindest dem Fusionsfilter 5 Informationen aus einem Stillstandsmodell bereitstellt, dabei insbesondere die Informationen, dass die Drehraten um alle drei Achsen den Wert Null aufweisen und wenigstens eine Positionsänderungsgröße ebenfalls den Wert Null aufweist sowie insbesondere die Geschwindigkeiten entlang aller drei Achsen den Wert Null aufweisen. Die Stillstandserkennungseinheit 8 ist dabei beispielgemäß so ausgebildet, dass sie als Eingangsdaten die Raddrehzahlen bzw. Raddrehzahlsignale nutzt sowie die "rohen" bzw. direkten Ausgangssignale der Inertialsensoranordnung 1.

Die Signalverarbeitungseinrichtung berechnet und/oder verwendet beispielgemäß eine erste Gruppe von Daten physikalischer Größen, deren Werte sich auf ein Fahrzeugkoordinatensystem beziehen und zusätzlich eine zweite Gruppe von Daten physikalischer Größen berechnet und/oder verwendet, deren Werte sich auf ein Weltkoordinatensystem beziehen, wobei dieses Weltkoordinatensystem insbesondere zumindest zur Beschreibung der Ausrichtung und/oder von dynamischen Größen des Fahrzeugs auf der Welt geeignet ist, wobei das Sensorsystem eine Ausrichtungsmodelleinheit 9 aufweist, mit welcher der Ausrichtungswinkel zwischen dem Fahrzeugkoordinatensystem und dem Weltkoordinatensystem berechnet wird.

Der Ausrichtungswinkel zwischen dem Fahrzeugkoordinatensystem und dem Weltkoordinatensystem in der Ausrichtungsmodelleinheit 9 wird berechnet zumindest auf Basis folgender Größen:
die Geschwindigkeit bezüglich des Fahrzeugkoordinatensystems, die Geschwindigkeit bezüglich des Weltkoordinatensystems und den Lenkwinkel.

Der Ausrichtungswinkel zwischen dem Fahrzeugkoordinatensystem und dem Weltkoordinatensystem wird beispielgemäß in der Ausrichtungsmodelleinheit 9 zusätzlich zumindest auf Basis einer oder mehrerer der folgenden Größen berechnet:
eine Ausrichtungsinformation des Fahrzeugs bezogen auf das Weltkoordinatensystem,
einige oder sämtliche der Korrekturwerte und/oder Varianzen des Fusionsfilters und/oder
die Beschleunigung des Fahrzeugs bezogen auf das Fahrzeugkoordinatensystem und/oder das Weltkoordinatensystem.

Die Ausrichtungsmodelleinheit 9 verwendet einige oder sämtliche der Ausgangsdaten und/oder Ausgangssignale der Strapdown-Algorithmus-Einheit 2 zur Berechnung.

Die Ausrichtungsmodelleinheit 9 ist beispielgemäß so ausgebildet, dass sie zusätzlich zu dem Ausrichtungswinkel noch eine Information über die Datenqualität dieser Größe berechnet und bereitstellt, insbesondere die Varianz des Ausrichtungswinkels, wobei die Ausrichtungsmodelleinheit 9 den Ausrichtungswinkel zwischen dem Fahrzeugkoordinatensystem und dem Weltkoordinatensystem sowie die Information über die Datenqualität dieser Größe dem Fusionsfilter 5 bereitstellt und der Fusionsfilter diesen Ausrichtungswinkel bei seinen Berechnungen verwendet und besonders bevorzugt die die Information über die Datenqualität dieser Größe, insbesondere die Varianz des Ausrichtungswinkels, an die Strapdown-Algorithmus-Einheit 2 weiterleitet.

## Patentansprüche

1. Sensorsystem für ein Fahrzeug, umfassend mehrere Sensorelemente (1, 3, 4) und eine Signalverarbeitungseinrichtung, wobei
die Signalverarbeitungseinrichtung so ausgebildet ist, dass sie die Sensorsignale der Sensorelemente zumindest teilweise gemeinsam auswertet, wobei
die Signalverarbeitungseinrichtung so ausgebildet ist, dass den Messdaten physikalischer Größen jeweils eine Zeitinformation zugeordnet wird, welche eine Information über den Zeitpunkt der jeweiligen Messung direkt oder indirekt umfasst, wobei die Signalverarbeitungseinrichtung diese Zeitinformation zumindest bei der Erzeugung eines Fusionsdatensatzes in einem Fusionsfilter (5) berücksichtigt, wobei das Fusionsfilter so ausgebildet ist, dass nacheinander Funktionsschritte durchführt werden, denen jeweils eine Zeitinformation zugeordnet wird, wobei in den Funktionsschritten jeweils Daten/Werte zu physikalischen Größen verarbeitet werden und zu definierten Zeitpunkten Fusionsdatensätze bereitgestellt werden, welche jeweils einen relativen Wert der physikalischen Größe sowie eine Information über die Datenqualität bezüglich jeder physikalischen Größe bereitstellt,
die das Fusionsfilter verarbeitet und/oder berechnet, und wobei das Fusionsfilter zumindest zu einer der physikalischen Größen intern einen Absolutwert und/oder internen Wert dieser physikalischen Größe aufweist und die Absolutwerte und/oder internen Werte der vergangenen Funktionsschritte zu einer oder mehreren physikalischen Größen eine definierte Zeitspanne gespeichert und bereitgehalten werden und abhängig von der Zeitinformation von Eingangswerten einer physikalischen Größe des Fusionsfilters diese Eingangswerte im Fusionsfilter verrechnet werden, indem sie mit dem gespeicherten und bereitgehaltenen Absolutwert und/oder internen Wert derselben physikalischen Größe verglichen und/oder verrechnet werden, deren Zeitinformation, also die Zeitinformation des Absolutwerts und/oder des internen Werts, im Wesentlichen mit der Zeitinformation des Eingangswerts übereinstimmt, wobei die definierte Zeitspanne durch eine maximale Verzögerung der Eingangswerte des Fusionsfilters definiert wird, welche sich aus einer maximalen Differenz der Zeitinformation der Messung einer physikalischen Größe relativ zur Zeitinformation eines aktuell anstehenden Funktionsschritts des Fusionsfilter bestimmt, wobei die maximale Verzögerung weiterhin als größer oder gleich einer maximal erwarteten Verzögerung einer Messung eines Satellitennavigationssystems definiert ist, wobei ein Empfänger des Satellitennavigationssystems Teil des Sensorsystems ist.

2. Sensorsystem nach Anspruch 1, **dadurch gekennzeichnet, dass** der Absolutwert und/oder interne Wert derselben physikalischen Größe mit welcher der Eingangswert verglichen und/oder verrechnet wird, aus den beiden bezüglich der Zeitinformationen zeitlich nächstliegenden, gespeicherten und bereitgehalten Absolutwerten und/oder internen Werten interpoliert wird, insbesondere sind dies der Absolutwert und/oder interne Wert mit einer Zeitinformation, welche etwas jünger ist und der Absolutwert und/oder interne Wert mit einer Zeitinformation, welche etwas älter ist als die Zeitinformation des zugeordneten Eingangswerts.

3. Sensorsystem nach mindestens einem der Ansprüche 1 oder 2, **dadurch gekennzeichnet, dass** den Eingangswerten des Fusionsfilters jeweils eine Zeitinformation zugeordnet ist, wodurch diese Eingangswerte physikalischer Größen jeweils einen Zeitrang aufweisen, wobei im Rahmen des anstehenden Funktionsschritts die Eingangswerte physikalischer Größen des Fusionsfilters mit internen Werten des Fusionsfilters derselben physikalischen Größen verrechnet werden, welche im Zeitrang und/oder bezüglich der Zeitinformation im Wesentlichen der jeweiligen Zeitinformation und/oder dem Zeitrang der jeweiligen Eingangsgröße entsprechen.

4. Sensorsystem nach mindestens einem der Ansprüche 1 bis 3, **dadurch gekennzeichnet, dass** die Signalverarbeitungseinrichtung so ausgebildet, dass der Zeitrang des aktuell anstehenden Funktionsschritts definiert wird durch die Zeitinformation des Eingangswerts einer physikalischen Größe mit der jüngsten Zeitinformation, wobei die Eingangswerte physikalischer Größen, deren Zeitinformation älter sind auf den Zeitrang der jüngsten Zeitinformation extrapoliert werden und anschließend mit internen Werten des Fusionsfilters verrechnet werden.

5. Sensorsystem nach mindestens einem der Ansprüche 1 bis 4, **dadurch gekennzeichnet, dass** die Signalverarbeitungseinrichtung so ausgebildet ist, dass die definierte Zeitspanne, in welcher Daten/ Informationen/ Werte gespeichert und bereitgehalten werden, definiert wird durch eine definierte Zeitspanne, welche für einige oder jede physikalische Größe unterschiedlich ausgeprägt ist.

6. Sensorsystem nach mindestens einem der Ansprüche 1 bis 5, **dadurch gekennzeichnet, dass** das Sensorsystem ein Satellitennavigationssystem umfasst, welches einen Synchronisationsimpuls und/oder ein Synchronisationsverfahren bereitstellt, mit welchem die Zeitinformationen des Fusionsfilters mit den Zeitinformationen des Satellitennavigationssystems synchronisiert werden.

7. Sensorsystem nach Anspruch 6, **dadurch gekennzeichnet, dass** das Satellitennavigationssystem Entfernungsdaten jeweils zwischen dem zugeordneten Satelliten und dem Fahrzeug oder eine davon abhängige Größe sowie Geschwindigkeitsinformationsdaten jeweils zwischen dem zugeordneten Satelliten und dem Fahrzeug oder eine davon abhängige Größe bereitstellt, welche als Eingangswerte an das Fusionsfilter übertragen werden, wobei diese Eingangswerte physikalischer Größen des Satellitennavigationssystem mit internen Werten des Fusionsfilters zeitkorrigiert verrechnet werden, indem in Abhängigkeit der Zeitinformationen der Eingangswerte die internen Werte dieser physikalischen Größen extrapoliert werden, falls die Zeitinformationen der Eingangswerte dieser physikalischen Größen älter sind als Zeitinformation des aktuell anstehenden Funktionsschritts des Fusionsfilters, wobei zur Extrapolation insbesondere ein Gradient der letzten zwei Werte einer solchen physikalischen Größe verwendet wird, falls diese zwei Werte auf zwei aufeinanderfolgenden Messungen beruhen, zwischen denen keine Messung derselben Messgröße ausgefallen ist.

## Claims

1. Sensor system for a vehicle, comprising a plurality of sensor elements (1, 3, 4) and a signal processing device, wherein
the signal processing device is designed such that it evaluates the sensor signals from the sensor elements at least partly jointly, wherein
the signal processing device is designed such that the measured data of physical variables are each assigned time information, which directly or indirectly comprises information about the time of the respective measurement, wherein the signal processing device considers this time information at least during the generation of a fusion data set in a fusion filter (5), wherein the fusion filter is designed such that functional steps, each of which is assigned time information, are carried out successively, wherein in the functional steps in each case data/values are processed to form physical variables and fusion data sets are provided at defined points in time, each of which provides a relative value of the physical variable and information about the data quality with respect to each physical variable which the fusion filter processes and/or calculates,
and wherein the fusion filter has an absolute value internal to at least one of the physical variables and/or an internal value of this physical variable, and the absolute values and/or internal values of the preceding functional steps relating to one or more physical variables of a defined time interval are stored and made available and, depending on the time information from input values of a physical variable of the fusion filter, these input values, the time information from which, that is to say the item of time information of the absolute value and/or the internal value, coincides substantially with the time information of the input value, are offset in the fusion filter by being compared and/or offset with the absolute value and/or internal value of the same physical variable that was stored and made available, wherein the defined time interval is defined by a maximum delay of the input values of the fusion filter, which is determined from a maximum difference of the time information of the measurement of a physical variable relative to the time information of a currently pending functional step of the fusion filter, wherein the maximum delay is further defined as greater than or equal to a maximum expected delay of a measurement from a satellite navigation system, wherein a receiver of the satellite navigation system is part of the sensor system.

2. Sensor system according to Claim 1, **characterized in that** the absolute value and/or internal value of the same physical variable with which the input value is compared and/or offset is interpolated from the two absolute values and/or internal values that were stored and made available that are closest with respect to the time information, in particular these are the absolute value and/or internal value with time information which is somewhat more recent and the absolute value and/or internal value with time information which is somewhat older than the time information of the associated input value.

3. Sensor system according to at least one of Claims 1 or 2, **characterized in that** the input values from the fusion filter are each assigned time information, as a result of which these input values of physical variables each have a priority, wherein, within the context of the pending functional step, the input values of physical variables of the fusion filter are offset with internal values from the fusion filter of the same physical variables which, in terms of priority and/or with respect to the time information, correspond substantially to the respective time information and/or the priority of the respective input variable.

4. Sensor system according to at least one of Claims 1 to 3, **characterized in that** the signal processing device is designed such that the priority of the currently pending functional step is defined by the time information of the input value of a physical variable with the most recent time information, wherein the input values of physical variables of which the time information is older are extrapolated to the priority of the most recent time information and then offset with internal values from the fusion filter.

5. Sensor system according to at least one of Claims 1 to 4, **characterized in that** the signal processing device is designed such that the defined time interval in which data/information/values are stored and made available is defined by a defined time interval, which is expressed differently for some or each physical variable.

6. Sensor system according to at least one of Claims 1 to 5, **characterized in that** the sensor system comprises a satellite navigation system, which provides a synchronization pulse and/or a synchronization method with which the time information from the fusion filter is synchronized with the time information from the satellite navigation system.

7. Sensor system according to Claim 6, **characterized in that** the satellite navigation system provides distance data in each case between the associated satellite and the vehicle or a variable dependent thereon, and also speed information data in each case between the associated satellite and the vehicle or a variable dependent thereon, which are transferred to the fusion filter as input values, wherein these input values of physical variables of the satellite navigation system are offset in a time-corrected manner with internal values from the fusion filter **in that**, depending on the time information of the input values, the internal values of these physical variables are extrapolated if the time information of the input values of these physical variables is older than time information of the currently pending functional step of the fusion filter, wherein in particular a gradient of the last two values of such a physical variable is used for the extrapolation if these two values are based on two successive measurements between which no measurement of the same measured value has failed.

## Revendications

1. Système capteur pour un véhicule, comprenant plusieurs éléments capteurs (1, 3, 4) et un dispositif de traitement de signal,
le dispositif de traitement de signal étant configuré de telle sorte qu'il interprète au moins partiellement en commun les signaux de capteur des éléments capteurs,
le dispositif de traitement de signal étant configuré de telle sorte qu'une information de temps est respectivement associé aux données de mesures de grandeurs physiques, laquelle comporte directement ou indirectement une information à propos de l'instant de la mesure respective, le dispositif de traitement de signal tenant compte de cette information de temps au moins lors de la génération d'un jeu de données de fusion dans un filtre de fusion (5), le filtre de fusion étant configuré de telle sorte que des étapes fonctionnelles sont exécutées les unes après les autres, auxquelles est respectivement associée une information de temps, des données/valeurs à propos de grandeurs physiques étant respectivement traitées dans les étapes fonctionnelles et des jeux de données de fusion étant fournis à des instants définis, lesquels fournissent respectivement une valeur relative de la grandeur physique ainsi qu'une information à propos de la qualité des données concernant chaque grandeur physique que le filtre de fusion traite et/ou calcule, et le filtre de fusion possédant en interne, au moins pour l'une de ces grandeurs physiques, une valeur absolue et/ou une valeur interne de cette grandeur physique et les valeurs absolues et/ou les valeurs internes des étapes fonctionnelles précédentes pour une ou plusieurs grandeurs physiques d'un intervalle de temps défini étant mémorisées et tenues à disposition et, en fonction de l'information de temps de valeurs d'entrée d'une grandeur physique du filtre de fusion, ces valeurs d'entrée sont compensées dans le filtre de fusion en les comparant et/ou les compensant avec la valeur absolue et/ou la valeur interne de la même grandeur physique dont l'information de temps, c'est-à-dire l'information de temps de la valeur absolue et/ou de la valeur interne, coïncide sensiblement avec l'information de temps de la valeur d'entrée, l'intervalle de temps défini étant défini par un retard maximal des valeurs d'entrée du filtre de fusion, lequel se détermine à partir d'une différence maximale entre l'information de temps de la mesure d'une grandeur physique et l'information de temps d'une étape fonctionnelle actuellement en cours du filtre de fusion, le retard maximal étant en outre défini comme étant égal ou supérieur à un retard maximal attendu d'un système de navigation par satellite, un récepteur du système de navigation par satellite faisant partie du système capteur.

2. Système capteur selon la revendication 1, **caractérisé en ce que** la valeur absolue et/ou la valeur interne de la même grandeur physique avec laquelle la valeur d'entrée est comparée et/ou compensée est interpolée à partir des deux valeurs absolues et/ou valeurs internes mémorisées et tenues à disposition, temporellement les plus proches en référence aux informations de temps, s'agissant notamment de la valeur absolue et/ou de la valeur interne ayant une information de temps qui est légèrement plus jeune et de la valeur absolue et/ou de la valeur interne ayant une information de temps qui est légèrement plus âgée que l'information de temps de la valeur d'entrée associée.

3. Système capteur selon au moins l'une des revendications 1 ou 2, **caractérisé en ce qu'**une information de temps est respectivement associée aux valeurs d'entrée du filtre de fusion, moyennant quoi ces valeurs d'entrée de grandeurs physiques possèdent respectivement une ancienneté, les valeurs d'entrée de grandeurs physiques du filtre de fusion étant, dans le cadre de l'étape fonctionnelle en cours, compensées avec des valeurs internes du filtre de fusion des mêmes grandeurs physiques qui, en ancienneté et/ou en référence à l'information de temps, correspondant sensiblement à l'information de temps et/ou à l'ancienneté de la grandeur d'entrée respective.

4. Système capteur selon au moins l'une des revendications 1 à 3, **caractérisé en ce que** le dispositif de traitement de signal est configuré de telle sorte que l'ancienneté de l'étape fonctionnelle actuellement en cours est définie par l'information de temps de la valeur d'entrée d'une grandeur physique ayant l'information de temps la plus jeune, les valeurs d'entrée des grandeurs physiques dont les informations de temps sont plus anciennes étant extrapolées à l'ancienneté de l'information de temps la plus jeune et ensuite compensées avec des valeurs internes du filtre de fusion.

5. Système capteur selon au moins l'une des revendications 1 à 4, **caractérisé en ce que** le dispositif de traitement de signal est configuré de telle sorte que l'intervalle de temps défini, dans lequel des données/informations/valeurs sont mémorisées et mises à disposition, est défini par un intervalle de temps défini qui est marqué différemment pour plusieurs ou chaque grandeur physique.

6. Système capteur selon au moins l'une des revendications 1 à 5, **caractérisé en ce que** le système capteur comporte un système de navigation par satellite, lequel fournit une impulsion de synchronisation et/ou un procédé de synchronisation avec laquelle/lequel les informations de temps du filtre de fusion sont synchronisées avec les informations de temps du système de navigation par satellite.

7. Système capteur selon la revendication 6, **caractérisé en ce que** le système de navigation par satellite fournit des données de distance respectivement entre les satellites associés et le véhicule ou une grandeur qui en est dépendante ainsi que des données d'information de vitesse respectivement entre les satellites associés et le véhicule ou une grandeur qui en est dépendante, lesquelles sont transmises en tant que valeurs d'entrée au filtre de fusion, ces valeurs d'entrée de grandeurs physiques du système de navigation par satellite étant compensées avec correction dans le temps en extrapolant les valeurs internes de ces grandeurs physiques en fonction des informations de temps des valeurs d'entrée dans le cas om les informations de temps des grandeurs d'entrée de ces grandeurs physiques sont plus anciennes que l'information de temps de l'étape fonctionnelle actuellement en cours du filtre de fusion, un gradient des deux dernières valeurs d'une telle grandeur physique étant notamment utilisé pour l'extrapolation dans le cas om ces deux valeurs s'appuient sur deux mesures successives entre lesquelles aucune mesure de la même grandeur de mesure n'a eu lieu.
